# EUROPEAN PATENT APPLICATION

(11) **EP 4 738 534 A1**
(43) Date of publication of application: **06.05.2026**
(21) Application number: 25210450.0
(22) Date of filing: 22.10.2025
(51) Int. Cl.: H01M 10/613, H01M 10/617, H01M 10/625, H01M 10/643, H01M 10/647, H01M 10/6567, H01M 50/211, H01M 50/213, H01M 50/291

(54) **ELECTRIC BATTERY PACK WITH CYLINDRICAL OR POUCH CELLS, AND WITH AN IMMERSION-TYPE THERMAL MANAGEMENT SYSTEM INCLUDING AN IMPROVED SEALING DEVICE**

(30) Priority: 31.10.2024 IT 202400024435
(71) Applicant: C.R.F. Società Consortile per Azioni, 10043 Orbassano (Torino) (IT)
(72) Inventor: RICCO, Raffaele, I-10043 Orbassano (Torino) (IT); VURRO, Luca, I-10043 Orbassano (Torino) (IT); LORUSSO, Eligio, I-10043 Orbassano (Torino) (IT); TRENTADUE, Maurizio Filippo, I-10043 Orbassano (Torino) (IT); DE MICHELE, Onofrio, I-10043 Orbassano (Torino) (IT); MAZZARELLA, Carlo, I-10043 Orbassano (Torino) (IT)
(74) Representative: Buzzi, Notaro & Antonielli d'Oulx S.p.A.

(57) **Abstract**

An electric battery pack (1) comprises one or more groups of battery cells (2) arranged inside a container (4). The battery cells (2) are cylindrical cells (2) or pouch cells arranged horizontally and immersed in a flow of a temperature-regulating liquid that maintains them within a predetermined temperature range. The temperature-regulating liquid flows from an inlet collector chamber (5), situated below the battery cells (2), through spaces (7) defined between the cells (2), into an outlet collector chamber (6) arranged above the cells. The spaces between the cells communicate with the inlet collector chamber (5) via a plurality of restricted passages (9). The battery cells (2) each have their respective positive and negative poles (P, N) situated at a same end, or on opposite ends, of the cell, facing a respective vertical side wall (40) of the container (4). All the poles (P, N) of the cells that are facing a respective vertical side wall (40) of the container (4) of the battery pack (1) are contained in one or more lateral chambers (C). The temperature-regulating liquid can flow from the inlet collector chamber (5) to the outlet collector chamber (6) also passing through the lateral chambers (C), which are isolated from the spaces (7) between the cells (2) by means of a separation wall (D) including a sealing panel (10) of elastomeric material, for example of silicone material, mounted on the ends of the cells (2) bearing the poles (P, N). Associated with the sealing panel (10) and/or with a rigid support frame (11) of the sealing panel are one or more rigid tubular elements (12) for the communication of the inlet collector chamber (5) with each lateral chamber (C).

## Description

### Field of the invention

The present invention relates to the field of electric batteries, in particular to electric batteries for powering traction electric motors of electric or hybrid vehicles.

Even more particularly, the invention relates to battery packs of the type in which the battery cells are in direct contact with a flow of a temperature-regulating liquid, typically a dielectric oil, which flows through the battery pack for the purpose of maintaining the battery cells within a predetermined temperature range, so as to ensure correct and safe operation of the battery pack under all operating and environmental conditions.

### Background of the invention

The Applicant has already proposed various solutions in the field of thermal management systems for electric battery packs. See, for example, the Italian patent applications 102023000022692, 102023000022698, 102023000022704, 102023000025884, 102024000002776, 102024000002779, 102024000004423, 102024000007807, 102024000007813, 102024000007816, 102024000007828, 102024000013039, 102024000013492, 102024000014308, 102024000014314, 102024000014326, 102024000015637, 102024000016354, 102024000016933, 102024000020863, 102024000020875, 102024000021069, 102024000021546, 102024000022857, all still not available to the public as of the date of the present invention.

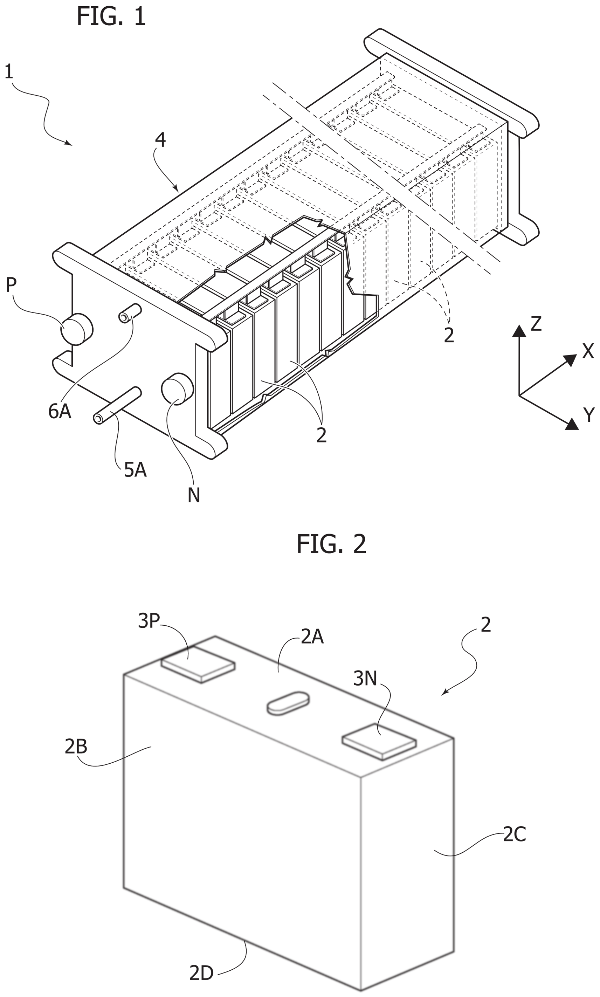

Figure 1 of the attached drawings shows an example of a battery module 1 of a type per se known, to which the present invention is applicable. The battery module 1 comprises an aligned array of battery cells 2 of the prismatic type illustrated in figure 2. This type of battery cell includes a housing with a top wall 2A, from which the positive and negative poles or "tabs" 3P and 3N of the cell 2 protrude, two main walls 2B (only one of which is visible in figure 2), two end walls 2C (only one of which is visible in figure 2) and a bottom wall 2D.

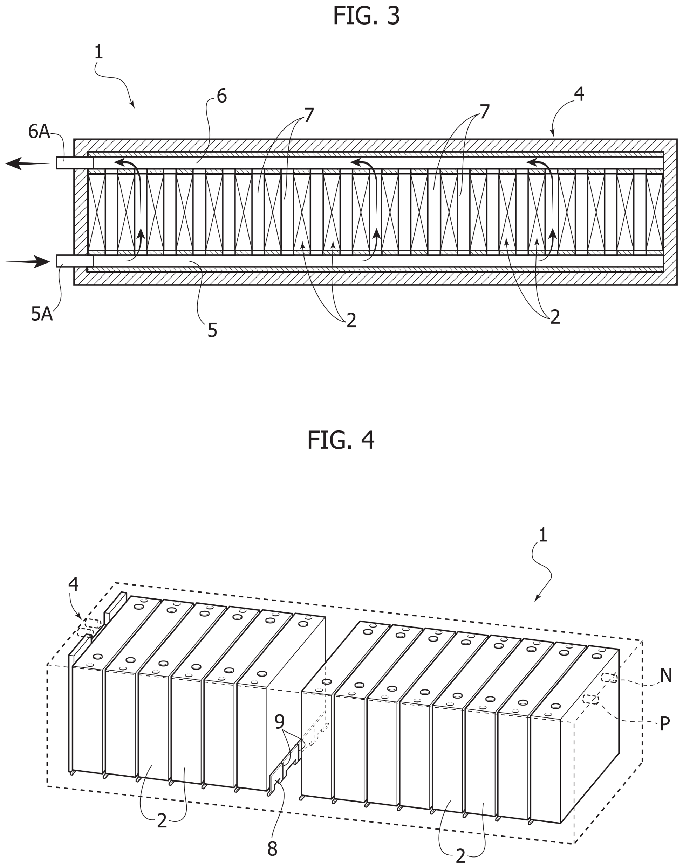

In battery modules of the type described above, the battery cells 2 are arranged within a sealed container 4 and are immersed in a flow of a dielectric temperature-regulating liquid, for example an oil. The container 4 defines internally an inlet collector chamber 5 (schematically illustrated in figure 3) arranged below the cells 2, and an outlet collector chamber 6 (also schematically illustrated in figure 3) arranged above the cells 2. The container 4 has an inlet 5A and an outlet 6A for the temperature-regulating liquid, communicating respectively with the inlet collector chamber 5 and with the outlet collector chamber 6. P and N indicate the positive pole and the negative pole of the battery module 1.

Generally, the inlet 5A is always arranged below the cells 2, while the outlet 6A is arranged above the cells 2, to allow any air bubbles formed within the fluid to be collected in the upper collector chamber. However, this layout is not the only possible one; the inlet and outlet can be swapped when an inlet pressure can be guaranteed to avoid any form of fluid evaporation.

Battery modules of the type illustrated in figure 1 are used to make battery packs intended to power traction electric motors of electric or hybrid vehicles. In use, the temperature-regulating liquid enters the inlet collector chamber 5, arranged below the battery cells 2, and reaches the outlet collector chamber 6, arranged above the battery cells 2, by passing through a plurality of passages 7, provided between the battery cells 2. In figure 3, the dimensions of the passages 7, provided between the battery cells 2, have been exaggerated for clarity.

In general, it is of fundamental importance to ensure that during the use of the electric vehicle, the battery cells are always at a temperature contained within a predetermined range, typically between a minimum threshold of 20° C and a maximum threshold of 55° C. The battery cells used in electric vehicles are typically lithium-ion battery cells, which tend to generate heat as a result of the chemical reaction that takes place inside the battery cells during operation, and also due to the Joule effect, due to the passage of current inside the battery. The term "battery operation" here refers to both the battery charging process and the discharging process, which typically occurs during vehicle travel. It is necessary to consider that the most critical operating conditions of the battery are those related to the fast charging process, i.e., charging the battery in a time of less than one hour.

During normal operating conditions of the battery unit, the temperature-regulating liquid must perform a cooling action, to counteract the temperature increase due to the heat generated in the cells for the reasons indicated above. For this purpose, the thermal regulation system comprises an external circuit to the battery module (not illustrated in figure 1), including one or more heat exchangers configured to cool the hot fluid coming from the outlet 6A, before it is fed again, via a pump (not shown), to the inlet 5A. However, under extreme operating conditions, particularly in cold climates, the temperature-regulating liquid must perform a heating function. For this purpose, the external circuit can comprise a heater heat exchanger and/or an electric resistance heating device.

With reference to the configuration illustrated by way of example in figure 3, experiences conducted on batteries of this type show that the temperature inside the battery module varies considerably both from cell to cell, since the cells 2 that are farther from the inlet 5A of the temperature-regulating liquid are subjected to less cooling, and within each cell, where the temperature distribution tends to be higher where the current lines are denser, for example near the poles.

Numerous studies have shown that:
- to reduce the aging process of the single battery cell, it is advisable to reduce the internal temperature gradient within the same cell to within 5° C;
- to avoid a "thermal runaway" phenomenon, destructive for the battery, it is necessary to keep the maximum temperature of each single cell below 55° C.

It is therefore desirable not only to maintain the temperature of the battery cell within a predetermined temperature range, but also to try to make the temperature of the different battery cells and the temperature within each cell as uniform as possible.

In order to solve this problem, solutions of the type schematically illustrated in figure 4 have already been proposed. This figure is a perspective view of a group of battery cells, with one of the cells removed to show an element 8 forming part of a spacer frame disposed between adjacent cells. In solutions of this type, each spacer element 8 comprises one or more relatively restricted passages (indicated by 9 in figure 4) that put the space between adjacent cells in communication with the inlet collector chamber 5. The restricted passages 9 are configured and dimensioned so as to oppose sufficient resistance to the flow of the temperature-regulating liquid to prevent the temperature-regulating liquid from tending to flow more in the spaces between the cells that are closer to the inlet opening 5A and/or the outlet opening 6A. In this way, it is achieved that the flow rate of the temperature-regulating liquid through the different spaces between the cells is substantially uniform. Furthermore, as illustrated in figure 4, each spacer element 8 includes a plurality of restricted passages, distributed along the width of the cells, which also allows uniforming the thermal regulation action between the center and the sides of each single cell.

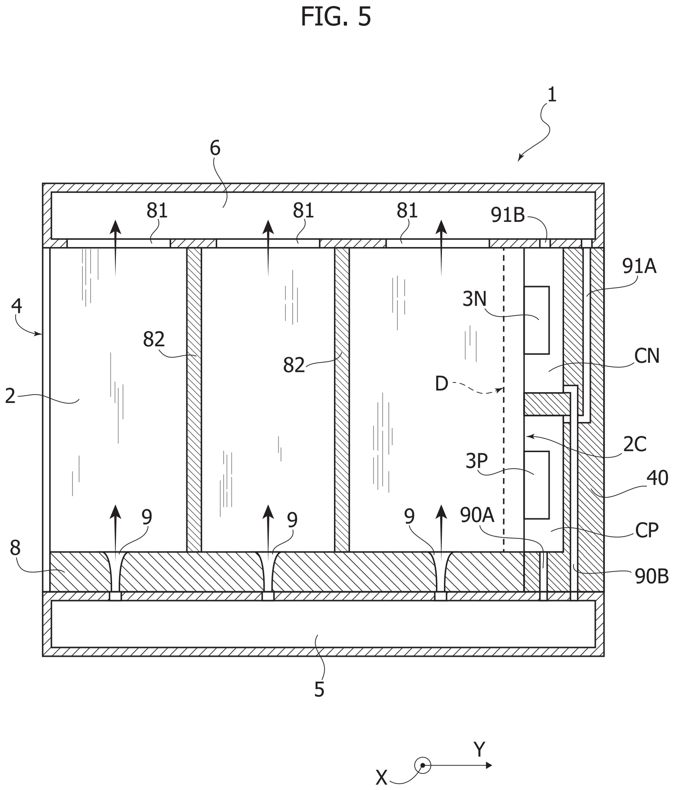

In developing solutions of this type, the Applicant has already proposed in its Italian patent application IT 10 2023 000025884, still secret as of the date of the present invention, a solution of the type illustrated in figure 5, which shows a sectional view of the battery unit in a plane orthogonal to the direction X of figure 1, along which the battery cells 2 are arranged side by side.

The solution of figure 5 relates to a case in which the battery cells 2 are laid horizontally so as to present the positive and negative poles 3P, 3N, on a vertical end wall of the cell, facing a vertical side wall 40 of the container 4 which is parallel to the direction X.

In figure 5, the parts common to those illustrated in figures 1-4 are indicated with the same reference numerals. Similarly to the solution described above, also in the case of the solution of figure 5, the battery cells 2 are kept spaced apart from one another by a spacer frame including a lower frame portion 8, in which the restricted passages 9 are formed for communication between the inlet collector chamber 5 and the spaces 7 between the cells 2. In the illustrated example, each spacer frame also comprises two vertical slats 82, arranged spaced apart from each other. The structure of the container 4 further comprises apertures 81 for communication between the spaces defined between the cells 2 by the spacer frames and the outlet collector chamber 6.

In the solution of figure 5, furthermore, in order to promote an effective thermal regulation action on the poles 3P, 3N of all the cells 2, all the poles of the different cells are contained within respective chambers CP and CN, defined within the container 4. The chambers CP, CN are isolated from each other and are also isolated from the spaces 7 between the cells 2, by means of a spacer wall D.

The chamber CP communicates with the inlet collector chamber 5 via a passage 90A, and communicates with the outlet collector chamber 6 via a passage 91A. The chamber CN, containing the negative poles 3N, communicates with the inlet collector chamber 5 via a passage 90B and with the outlet collector chamber 6 via a passage 91A.

Preferably, the passages 90A, 90B include relatively narrow sections, configured so as to prevent the temperature-regulating liquid from tending to flow more through the chambers CP, CN, rather than through the spaces defined between the different cells.

In further developing this solution, the Applicant has realized the need for further improvements, especially with reference to the realization of the wall D that separates the chambers CP, CN, containing the cell poles, from the spaces 7 between the cells.

This problem is not easy to solve, as it is necessary, on the one hand, to obtain an effective seal, and on the other hand, to ensure that the effectiveness of the seal remains unaltered even following phenomena of "swelling" or "breathing", to which the battery cells are subject during the normal operation of the battery, due to the gases that are produced inside the cell housing as a result of the chemical reaction during the battery charging and discharging operations. Finally, it is also necessary to ensure that the flow through the spaces between the cells and through the chambers containing the cell poles is always strictly uniform and under control, even in the case of deformations of the cell walls as a result of the phenomena described above.

For the purpose of solving these problems, the Applicant has proposed a further solution, illustrated in the attached figures 6-10, which has been the subject of its Italian patent application IT 10 2024 000021546, still secret as of the date of the present invention.

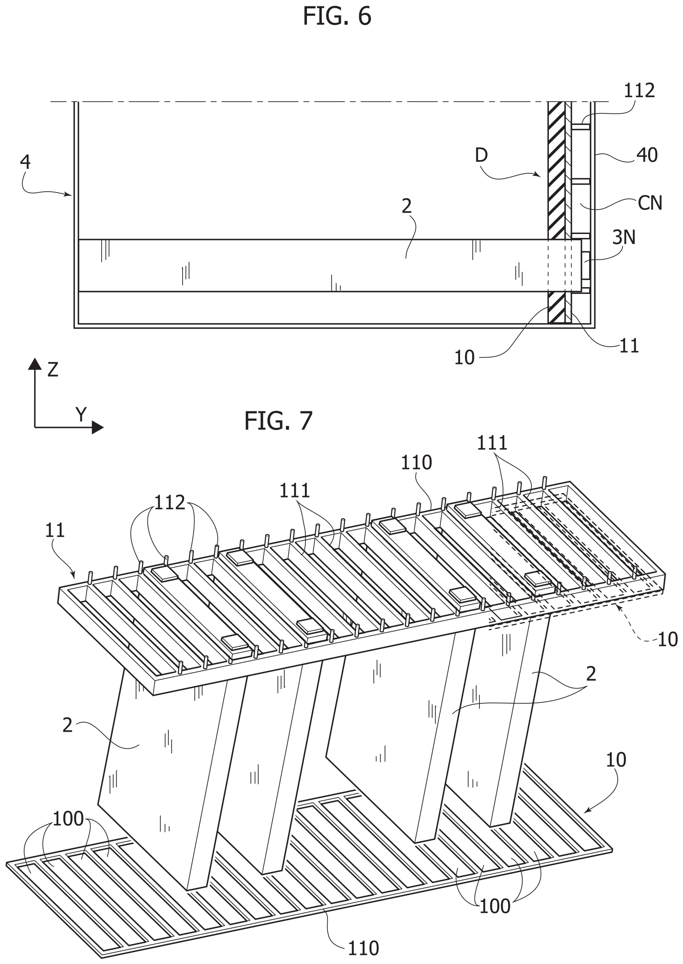

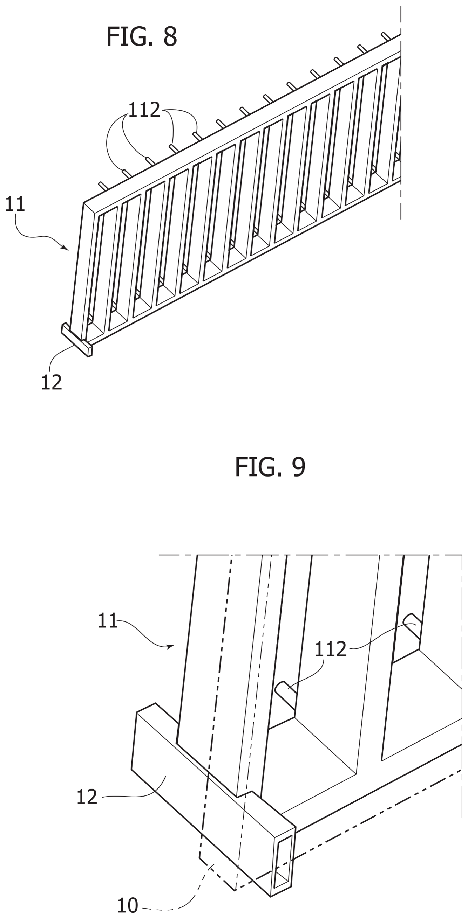

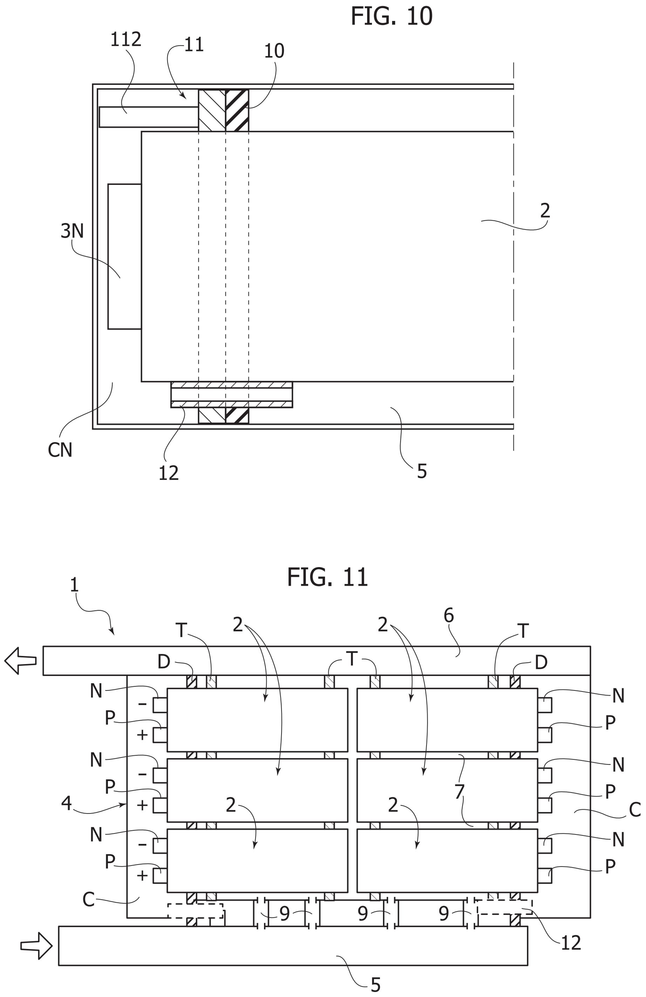

In figures 6-10, figure 6 is a schematic sectional view, in a horizontal plane, of a battery unit. Figure 7 is a perspective view of some of the cells of the battery unit of figure 6, with the support frame of the sealing panel mounted above them and with the sealing panel shown in an exploded condition, below the cells. Figure 8 is a further partial perspective view of the support frame of the sealing panel, and figures 9, 10 are a perspective view and a sectional view, which show a detail of the support frame and the sealing panel in which a tubular element is provided for communication to the inlet collector chamber of the battery unit and the chambers containing the poles of the battery cells.

The solution of figures 6-10 is also of the type that has already been described above with reference to figure 5, i.e., of the type in which the battery cells 2 are arranged laid horizontally, with vertical end walls bearing the positive poles 3P and the negative poles 3N of the cells, facing a vertical side wall 40 of the housing 4 which extends parallel to the longitudinal direction X (figure 1) along which the cells 2 are arranged side by side.

The solution illustrated in figures 6-10 concerns, in particular, the structure and configuration of the wall D, used to isolate the chambers containing the poles 3P, 3N from the space inside the container that is occupied by the cells 2.

It should be noted that, while figure 5 shows a solution in which the positive poles 3P and the negative poles 3N are contained in two separate chambers CP and CN, the solution of figures 6-10 refers to a case in which the positive and negative poles 3P, 3N are contained in a single chamber that communicates both with the inlet collector chamber 5 and with the outlet collector chamber 6 and that is isolated from the spaces between the cells.

Figure 6 illustrates a sectional and plan view of the battery pack, in which a single battery cell 2 has been shown inside the container 4. The battery cell 2 has its positive and negative poles (in figure 6 only the negative pole 3N is visible) on a vertical end wall thereof facing the wall 40 of the housing 4, which extends parallel to the direction X.

In this solution, the wall D that isolates the chamber (indicated by CN in figure 6) containing the positive and negative poles from the space occupied by the cells 2 has a composite structure, including a sealing panel 10, preferably made of an elastomeric material, for example a silicone material suitable for resisting high temperatures, and a support frame 11, which is rigidly connected to the housing 4 and which supports the sealing panel 10.

Figure 7 shows an example in which the support frame 11 has a rack-like conformation, including two parallel and spaced-apart longitudinal slats 110, joined together by a plurality of crosspieces 111. The frame 11 is configured and dimensioned such that the end of each cell 2 can be received in a respective space delimited between the slats 110 and two crosspieces 111. In this way, the crosspieces 111 also perform a function of spacer between one cell and another.

The panel of elastomeric material 10, having a sealing function, is basically a rectangular panel with a plurality of apertures 100 (see the lower part of figure 7), configured and dimensioned to allow the panel 10 to be fitted over the ends of the cells 2, thus acting as a sealing gasket.

As better illustrated in figures 8-10, in this example the support frame 11 further comprises a plurality of pins 112, which are connected to the wall 40 of the housing 4 and which ensure that the frame 11 is rigidly maintained in position by the wall 40 of the container 4.

In this example, one or more rigid tubular elements 12, for example made of metallic material, are incorporated (e.g., embedded by molding) into the structure of the support frame 11 and/or of the sealing panel 10, which ensure communication between the inlet collector chamber 5 and the chamber CN through a relatively restricted passage, of strictly determined size.

In the battery pack described above, effective control of the flow of the temperature-regulating liquid is guaranteed, both through the spaces between the cells 2 of the battery unit, and in one or more chambers containing the positive and negative poles of the cells, which represent critical elements subject to overheating. This is achieved by providing a sealing panel 10 capable of ensuring an effective seal under all operating conditions, adapting to the deformations to which the walls of the battery cells are subject during operation. At the same time, the sealing panel is maintained in position by a support frame 11 anchored to the battery pack container, which ensures that the sealing panel cannot undergo undesired deformations due to overpressures that may occur in the flow of the temperature-regulating liquid. Finally, communication between the inlet collector chamber and the chamber, or chambers, containing the positive and negative poles of the cells, is ensured via passages of strictly controlled cross-section, defined by rigid tubular elements, preferably metallic, associated with said sealing panel and/or with said support frame.

As already indicated, the solution described above with reference to figures 6-10 has been the subject of the Italian patent application IT 10 2024 000021546 of the same Applicant, not yet available to the public as of the date of the present invention.

Starting from this previous proposal, the Applicant has set itself the problem of pursuing the same advantageous results also in the field of battery packs using different types of cells, in particular cylindrical cells or pouch-type cells.

Further solutions are known from documents DE 10 2018 133004 A1 and US 2010/104927 A1.

### Object of the invention

It is therefore an object of the present invention to realize a battery pack of the type indicated at the beginning of the present description, using cylindrical cells or pouch-type cells, which is provided with a highly efficient thermal regulation system, with particular regard to the most critical areas constituted by the poles of the battery cells.

A further object of the invention is to realize a battery pack of the type indicated herein, with cylindrical or pouch cells, in which the thermal regulation system is capable of guaranteeing, under all operating conditions, a substantial uniformity of the thermal regulation action on the different cells, and, for each cell, a substantial uniformity of the thermal regulation action between the different zones of the cells, including the zone of the cell poles.

A further object of the invention is to realize a battery pack of the type indicated herein, with cylindrical or pouch cells, in which the high efficiency and reliability of the thermal regulation system remains unaltered for the entire life cycle of the battery, despite the deformations to which the housings of the battery cells are subject during their normal operation.

Finally, a further object of the invention is to achieve all the aforementioned objectives with extremely simple and low-cost means.

### Summary of the invention

With a view to achieving one or more of the aforementioned objects, the invention has for its object an electric battery pack, comprising one or more groups of battery cells, arranged inside a container,
wherein the container is configured to be traversed by a flow of a temperature-regulating liquid that is intended to come into direct contact with the battery cells to maintain them within a predetermined temperature range,
wherein the battery pack comprises a distribution system for the temperature-regulating liquid, including:
   an inlet opening for the temperature-regulating liquid, communicating with an inlet collector chamber, arranged below the battery cells,
   an outlet opening for the temperature-regulating liquid, communicating with an outlet collector chamber arranged above the battery cells,
   wherein the inlet collector chamber and the outlet collector chamber communicate with each other via spaces defined between the battery cells,
   wherein the spaces defined between the battery cells communicate with the inlet collector chamber, situated below the battery cells, via a plurality of relatively restricted passages, configured to oppose sufficient resistance to the flow of the temperature-regulating liquid to prevent a tendency of the temperature-regulating liquid to flow more in the spaces between the battery cells that are closer to said inlet opening and/or to said outlet opening,
   wherein the battery cells are cylindrical or pouch cells arranged with their main axis directed horizontally and with their respective positive and negative poles situated at a same end, or on opposite ends, of the cell, facing a respective vertical side wall of the container,
   wherein all the poles of the cells that are facing a respective vertical side wall of the container of the battery pack are contained in one or more lateral chambers inside the container, which are isolated from the spaces between the cells,
   wherein said one or more lateral chambers containing the poles of the cells communicate with the inlet collector chamber and with the outlet collector chamber, whereby the temperature-regulating liquid can flow from said inlet collector chamber to said outlet collector chamber also passing through said one or more lateral chambers,
   wherein said one or more lateral chambers containing the poles of the cells, are hydraulically isolated from the spaces between the cells by means of a separation wall including a sealing panel of elastomeric material, preferably of silicone material, mounted on the ends of the cells bearing the poles, and further including a rigid support frame of the sealing panel, which is rigidly connected to the container,
   wherein, associated with the sealing panel are one or more rigid tubular elements for the communication of the inlet collector chamber with each lateral chamber, said one or more tubular elements being incorporated into the sealing panel and into the support frame.

Thanks to the aforementioned characteristics, the battery pack according to the invention guarantees a perfect sealed separation between the chambers containing the positive and negative poles of the cells and the spaces between the cells. The rigid support frame of the sealing panel ensures reliable mounting of the sealing panel, while the latter adapts, thanks to its flexibility, to the movements to which the cell walls may be subject during battery operation, so as to ensure, under all conditions, a perfect seal. At the same time, the flow of the temperature-regulating liquid from the inlet collector chamber to said chambers containing positive and negative poles of the cells is controlled in a rigorous manner during the entire life cycle of the battery, since the communication is defined by one or more rigid tubular elements, for example made of metallic material, embedded in the material of the sealing panel and/or in the support frame of the sealing panel.

The sealing panel is made of an electrically non-conductive elastomeric material, for example a silicone material, also having properties of resistance to high temperatures.

The support frame of the sealing panel can be, for example, made of plastic material, for example PTFE.

A fundamental aspect of the invention is the inclusion of one or more rigid tubular elements, for example made of metallic material, within the sealing panel and/or within the support frame, which ensures constant and rigorous control of the flow rate of the temperature-regulating liquid flowing from the inlet collector chamber of the battery pack to the chambers containing the poles of the battery cells. In this way, uniformity of the flow of the temperature-regulating liquid through the different spaces between the cells and through the chambers containing the cell poles can be guaranteed.

The sealing panel, thanks to its elastic deformability, is capable of adapting to deformations of the cell walls during operation. This aspect is crucial for maintaining the integrity of the system throughout the entire life cycle of the battery.

Another significant advantage consists in the fact that, thanks to the use of a support frame for the sealing panel, it is prevented that the sealing panel can be deformed or displaced in the case of pressure increases in the temperature-regulating liquid.

In summary, the invention makes available a robust and reliable solution that ensures sealing and an efficient thermal regulation action of the battery cells (cylindrical or pouch), while at the same time maintaining high compatibility with the structural deformations that can occur during operation.

### Brief description of the figures

Further characteristics and advantages of the invention will result from the following description with reference to the attached drawings, provided by way of non-limiting example only, in which:
figures 1-10 illustrate the solutions previously studied and proposed by the Applicant, according to what has already been indicated and described above,
figure 11 is a schematic sectional view of an example of embodiment of a battery unit with cylindrical cells, according to the present invention,
figures 12, 13 are schematic perspective views illustrating how the cylindrical cells are supported within the container of the battery pack according to the invention, and
figure 14 illustrates a variant of figure 11.

### Detailed description of the invention

Figures 1-10 have already been described above.

Figures 11-14 show examples of embodiment of the battery pack according to the invention. Fundamentally, the invention consists in the application of a solution of the type illustrated in figures 6-10 to a battery pack with cylindrical or pouch battery cells. The examples of figures 11-14 refer to battery packs with cylindrical cells.

With reference to figure 11, inside the container 4 are supported, by means of perforated vertical walls T, cylindrical cells 2 arranged with their main axes directed horizontally. In the example, the cells 2 are arranged side by side and parallel to each other, on multiple superimposed levels. Each cell has its two poles P, N on a same end face, and the cells are arranged in two groups having the poles facing respectively one or the other of two opposite vertical walls 40 of the container 4. As in the solutions described above, the poles P, N facing a same side wall 40 are contained in a chamber C which is isolated from the spaces 7 defined between the cells 2 and then, through apertures (not illustrated) in the top wall of the container, in the outlet collector chamber 6.

Also in this case, the temperature-regulating liquid can flow from an inlet collector chamber 5, through the restricted passages 9, into the spaces 7 between the cells.

As in the previously described solutions, also each chamber C containing the poles P, N of the cells, communicates both with the inlet collector chamber 5 and with the outlet collector chamber 6, whereby the temperature-regulating liquid can also flow through the chambers C, ensuring adequate cooling of the cell poles. Also in this case, for obtaining the best result, it is necessary that each chamber C be hydraulically isolated from the spaces 7 between the cells.

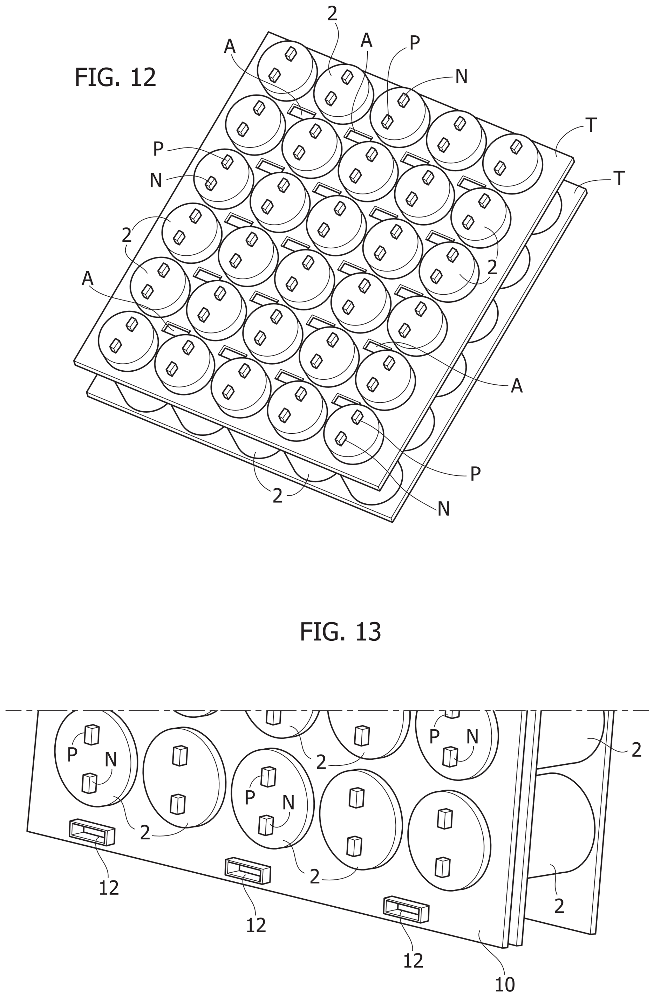

Analogously to what is described in figures 6-10, this is achieved by means of a panel 10 of silicone material (see figure 13) having a distribution of holes configured to receive the cells 2 therein and to ensure the desired seal.

The panel 10 is supported against one of the walls T, which acts as a support frame for the panel 10.

With the exception of the wall T that acts as a support frame for the sealing panel 10, the perforated vertical walls T, which support the cells 2, preferably have auxiliary apertures A (figure 12) that allow the passage of the temperature-regulating liquid from one side to the other of said walls.

Analogously to the solution of figures 6-10, each chamber C communicates with the inlet collector chamber 5 via a plurality of restricted passages defined by rigid tubular elements 12 (figure 12), for example metallic, associated with the sealing panel 10. The tubular elements 12 can be embedded in the sealing panel 10 and in the relative support frame T.

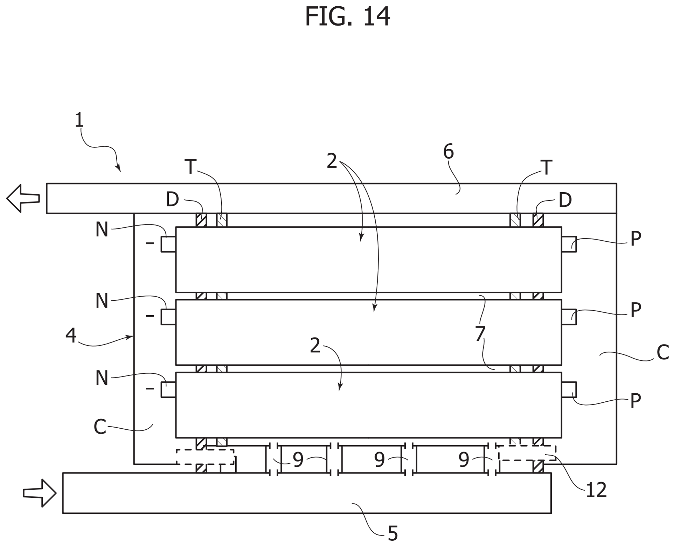

Figure 14 shows a variant in which a single group of cylindrical cells arranged side by side and superimposed is provided, and in which each cell has its two poles at its opposite ends.

As is evident from the foregoing description, the invention makes it possible to obtain efficient and targeted thermal regulation of every critical area of the battery pack, in a solution with cylindrical cells. The invention also protects the same solution in the case of pouch cells. In this case the pouch cells are supported in a laid position, with their main axis directed horizontally. The solution can be entirely analogous to that illustrated in figures 11-14, except that the sealing panel 10 and the vertical walls T will have holes for engaging the cells having a shape and dimensions corresponding to the shape and dimensions of the cross-section of the pouch cells.

Naturally, the principle of the invention remaining unchanged, the details of construction and the forms of embodiment may vary widely with respect to what has been described and illustrated by way of example only, without thereby departing from the scope of the present invention, as defined in the appended claims.

## Claims

1. Electric battery pack, comprising one or more groups of battery cells (2), arranged inside a container (4),
wherein the container (4) is configured to be traversed by a flow of a temperature-regulating liquid that is intended to come into direct contact with the battery cells (2) to maintain them within a predetermined temperature range,
wherein the battery pack (1) comprises a distribution system for the temperature-regulating liquid, including:
an inlet opening (5A) for the temperature-regulating liquid, communicating with an inlet collector chamber (5), arranged below the battery cells (2),
an outlet opening (6A) for the temperature-regulating liquid, communicating with an outlet collector chamber (6) arranged above the battery cells (2),
wherein the inlet collector chamber (5) and the outlet collector chamber (6) communicate with each other via spaces (7) defined between the battery cells (2),
wherein the spaces (7) defined between the battery cells (2) communicate with the inlet collector chamber (5), situated below the battery cells (2), via a plurality of relatively restricted passages (9), configured to oppose sufficient resistance to the flow of the temperature-regulating liquid to prevent a tendency of the temperature-regulating liquid to flow to a greater extent in the spaces (7) between the battery cells (2) that are closer to said inlet opening (5A) and/or to said outlet opening (6A),
wherein the battery cells (2) are cylindrical or pouch cells arranged with their main axis directed horizontally and with their respective positive and negative poles (P, N) situated at a same end, or on opposite ends, of the cell, facing a respective vertical side wall (40) of the container (4),
wherein all the poles of the cells that are facing a respective vertical side wall (40) of the container (4) of the battery pack (1) are contained in one or more lateral chambers (C) inside the container (4), which are isolated from the spaces (7) between the cells (2),
wherein said one or more lateral chambers (C) containing the poles (P, N) of the cells (2) communicate with the inlet collector chamber (5) and with the outlet collector chamber (6), whereby the temperature-regulating liquid can flow from said inlet collector chamber (5) to said outlet collector chamber (6) also passing through said one or more lateral chambers (C),
wherein said one or more lateral chambers (C) containing the poles (P, N) of the cells, are hydraulically isolated from the spaces (7) between the cells (2) by means of a separation wall (D) including a sealing panel (10) of elastomeric material, preferably of silicone material, mounted on the ends of the cells (2) bearing the poles (3P, 3N), and further including a rigid frame (11) for supporting the sealing panel (10), which is rigidly connected to the container (4),
wherein, associated with the sealing panel (10) are one or more rigid tubular elements (12) for the communication of the inlet collector chamber (5) with each lateral chamber (C), said one or more tubular elements being incorporated into the sealing panel (10) and into the support frame (11).

2. Battery pack according to claim 1, wherein the battery cells are cylindrical cells (2) which are supported by internal vertical walls (T) of the container (4) each having a plurality of apertures through which the cylindrical cells are arranged, and
wherein the apertures of said vertical support walls (T) are configured and arranged such that the cylindrical cells (2) are supported in positions spaced apart from each other, arranged side by side parallel to each other in multiple superimposed levels.

3. Battery pack according to claim 2, **characterized in that** said vertical walls (T) for supporting the cylindrical cells (2) each have auxiliary apertures (A) for the passage of the temperature-regulating liquid from one side to the other of the support wall (T).
